# EUROPEAN PATENT APPLICATION

(11) **EP 0 597 529 A1**
(43) Date of publication of application: **18.05.1994**
(21) Application number: 93203083.6
(22) Date of filing: 03.11.1993
(51) Int. Cl.: G01D 5/16, G01B 7/02

(54) **Potentiometer device**

(30) Priority: 09.11.1992 NL 9201961
(71) Applicant: STERTIL B.V., NL-9288 CA Kootstertille (NL)
(72) Inventor: Berends, Jan, NL-9285 ML Buitenpost (NL); Fijnvandraat, Jan Willem, NL-8629 PM Scharnegoutum (NL)
(74) Representative: 't Jong, Bastiaan Jacobus

(57) **Abstract**

The invention relates to a potentiometer device comprising a housing, a multi-turn potentiometer connected to the housing, a pulley which is mounted rotatably relative to the housing and coupled to a shaft of the potentiometer and on which a cord is wound and resilient means which load the pulley in the wind-up sense of the cord. The pulley has a cylindrical surface and is received in a cylindrical chamber in the housing, which chamber has a diameter which is substantially equal to that of the pulley with the cord wound thereon, so that the cord lying on the pulley practically touches the wall of the chamber.

## Description

The invention relates to a potentiometer device with a cord which can be pulled counter to spring force out of a housing. Such a potentiometer device is used for generating an electrical signal corresponding with a position of a rectilinearly movable element. The cord is connected to the movable element and the potentiometer device is fixedly mounted or vice versa, so that with the movement of the element the cord is pulled further or less far out of the housing. In known devices the longitudinal movement of the cord is transmitted by a gear mechanism onto a potentiometer. In order to achieve the desired accuracy the mechanism itself must have a great accuracy, whereby this is expensive.

The invention now has for its object to provide a potentiometer device of the type described in the preamble which can be manufactured at a low cost and still have the desired accuracy.

This object is achieved with the potentiometer device characterized in claim 1. It is hereby ensured that the cord winds onto and unwinds from the pulley evenly without there being a danger of coils of the cord coming to lie over one another, which would result in an inaccurate measurement. Due to the possibility of thus directly coupling the pulley to the potentiometer shaft, expensive transmission mechanisms can be dispensed with.

A very favourable further development is characterized in claim 2. The position of the cord on the pulley is hereby fully determined in every rotational position of the pulley, which contributes to a high degree of accuracy.

The preferred step of claim 3 further ensures that the cord will with certainty wind properly onto the pulley.

A favourable further development is characterized in claim 4. Because the pulley is fixed directly onto the shaft of the potentiometer, no separate bearing of the pulley is needed and a transmission mechanism between the pulley and the potentiometer is likewise dispensed with.

A further favourable embodiment is characterized in claim 5. It has been found that the low load of the potentiometer in this manner is very advantageous, whereby a very long useful life of the potentiometer device can be achieved with commercially available potentiometers.

The step of claim 6 contributes to a simple construction of the device, wherein due to the direct engagement of the spiral spring onto the cord drum and thereby onto the shaft of the potentiometer a very favourable load is obtained which results in a long lifespan.

With the step of claim 7 is achieved that the spring force can be adjusted in simple manner by rotating the spring holder relative to the housing of the potentiometer device and locking the holder in a suitable rotational position.

In order to ensure that the cord can wind on and off evenly with a minimal risk of jamming and wear thereof, the step of claim 8 is preferably applied. A thus embodied cord is form-retaining and smooth, which contributes to the desired reliable operation.

When the cord is released in the fully extended position, the pulley can be brought to a high rotational speed by the resilient means before the end of the cord has arrived at the housing. The pulley hereby acquires great energy which can result in damage to the device. Applying the step of claim 9 ensures that when the hose comes into contact with the housing of the device it evenly slows the speed of the cord and therefore the pulley, whereby such damage is prevented.

The invention will be elucidated further in the following description with reference to the embodiment shown in the figures.

Figure 1 shows a front view of a potentiometer device according to an embodiment of the invention.

Figure 2 shows the section according to A-A in figure 1.

The potentiometer 1 comprises a housing 12 in which is fixed a multi-turn potentiometer 5. This potentiometer 5 is received with a shoulder 23 in a bore 24 of the housing 12 and fixed by glueing. The fitting of the shoulder 23 in the bore 24 is a slide fitting, so that the potentiometer 5 is mounted precisely centered in housing 12. Another fixing method, such as for instance clamping by means of screws, can of course be applied instead of glueing.

The potentiometer 5 is a normal commercially available potentiometer. A pulley 2 is fixed by means of an adjustable screw 8 onto the shaft 18 of the potentiometer. The pulley 2 has a cylindrical outer surface in which a helically extending groove 15 is arranged.

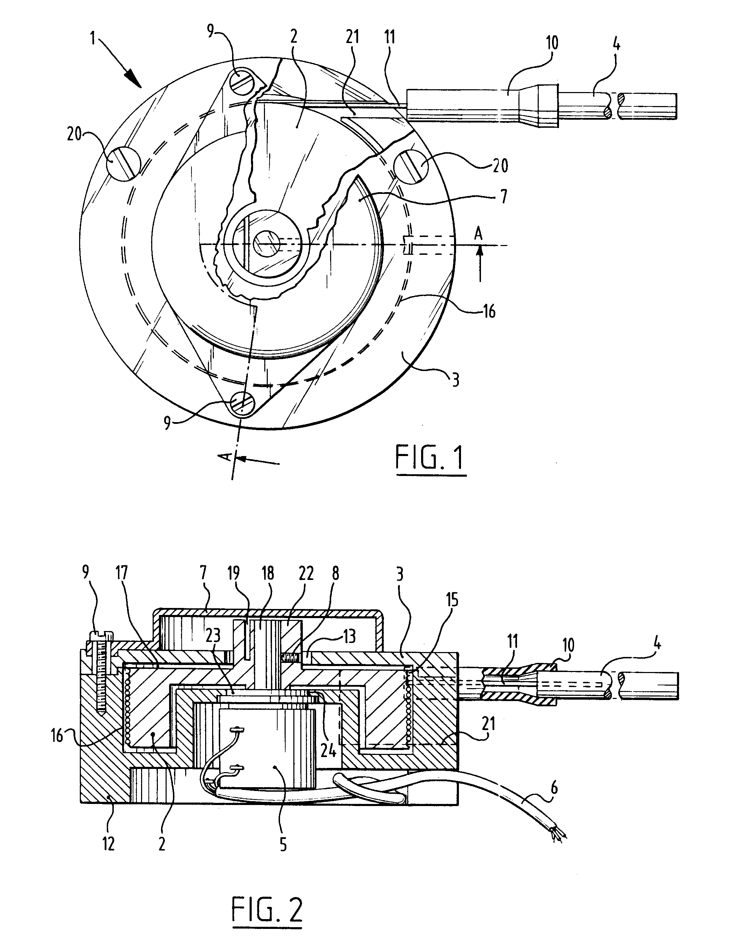

A cord 11 is wound through a number of coils into this groove 15 and, in the portion of the groove furthest to the left as seen in figure 2, is fixedly glued for example over a quarter of the periphery. The groove 15 of course has dimensions such that the cord 11 fits precisely therein. The groove 15 is further so deep that the cord 11 can lie completely therein.

Recessed into the housing 12 is a chamber 17 which has a cylindrical wall 16 with an only slightly larger diameter than the diameter of the pulley 2 with cord wound thereon. As the figure shows, the wall 16 of chamber 17 forms a containment for the cord so that, should it for instance be tensionless, it cannot move out of the groove.

As can be seen further in the figure, the pulley 2 is embodied in a cup-shape, wherein the annular outer portion thereof extends round the potentiometer 5. Thus achieved is that the middle of the cylindrical pulley surface lies as seen in axial direction approximately axially at the position of a bearing of the potentiometer 5. The force exerted by cord 11 on the pulley therefore results at most in a very slight bending load on the shaft 18, which furthers the accuracy of the device.

The chamber 17 is closed off using a cover 3 which is mounted on the housing 12 by means of a number of screws 20.

The cover 3 has a central opening 13 through which a hub 22 of the pulley 2 extends. Formed in the hub 22 is a groove 19 into which can engage the inner end of a spiral spring. For the sake of clarity this is not drawn in the figures. The spiral spring is accommodated in a cup-shaped spring holder 7 which is screwed against cover 3 using screws 9. The outer end of the spiral spring is connected to the spring holder 7 in random manner.

After mounting of potentiometer 5, pulley 2 with cord 11 thereon and the cover 3, the spring holder 7 is arranged wherein it is ensured that the inner end of the spiral spring falls into the groove 19. By rotating the spring holder a number of turns to the left as seen in figure 1, a biasing force is generated which ensures that the cord is kept tensioned at all times.

In the embodiment shown the spring holder 7 has a fixed position relative to the housing. In another embodiment the rotational position of the spring holder can also be made randomly adjustable in order to enable adjusting of the biasing force on cord 11 to a desired value.

Formed in the housing 12 is a channel 21 tangential to the wall 16 of the chamber 17, through which channel the cord 11 extends. This channel has an axial length substantially equal to that of the cylindrical surface of pulley 2. When the cord 11 is pulled out the position at which the cord 11 comes into contact with the pulley moves to the left as seen in figure 2. This has the result that the cord 11, when the end thereof moves rectilinearly away from the potentiometer device, comes to lie at a small angle relative to the shaft of the potentiometer device. This angle however remains so small, even when the cord is fully pulled out, that this does not influence the accuracy of the potentiometer.

Fixed to the end of the cord 11 is a rod 4 with which the end of the cord can be fixedly clamped to the movable element. As shown in figure 2, a piece of flexible hose 10 is arranged round the end of cord 11 which functions as impact damper in case the cord unintentionally comes loose and the pulley is rotated at increasing speed through the action of the spiral spring. When the piece of hose 10 comes into contact with the housing this movement is slowed evenly because hose 10 can deform. Silicon rubber is a suitable material for the hose.

The potentiometer device according to the invention can be manufactured at comparatively very low cost, while an accuracy of approximately 2.5 %o can nevertheless be achieved therewith for a long useful life.

The embodiment of the invention shown in the figures and discussed above is recommended, but the invention is not limited thereto. By applying one or more of the steps according to the invention an economically favourable product is already obtained.

## Claims

1. Potentiometer device comprising a housing, a multi-turn potentiometer connected to the housing, a pulley which is mounted rotatably relative to the housing and coupled to a shaft of the potentiometer and on which a cord is wound and resilient means which load the pulley in the wind-up sense of the cord, wherein the pulley has a cylindrical surface and is received in a cylindrical chamber in the housing, which chamber has a diameter which is substantially equal to that of the pulley with the cord wound thereon, so that the cord lying on the pulley practically touches the wall of the chamber.

2. Potentiometer device as claimed in claim 1, wherein the pulley has in its cylindrical surface a helically extending groove receiving the cord.

3. Potentiometer device as claimed in claim 2, wherein the groove has a depth substantially equal to the thickness of the cord.

4. Potentiometer device as claimed in any of the foregoing claims, wherein the pulley is fixed directly onto the shaft of the potentiometer, so that a bearing of the potentiometer shaft forms the bearing of the pulley.

5. Potentiometer device as claimed in claim 4, wherein the pulley takes a cup-like form and extends partially round the potentiometer, wherein the axial position of the pulley on the shaft of the potentiometer is such that a bearing of the potentiometer shaft lies substantially in the plane through the axial centre of the cylindrical surface of the pulley.

6. Potentiometer device as claimed in any of the foregoing claims, wherein the pulley carries a hub protruding through a cover of the housing and the resilient means comprise a spiral spring arranged parallel to and coaxially of the pulley and having an inner end engaging on this hub.

7. Potentiometer device as claimed in claim 6, wherein the spiral spring is received in a spring holder and is connected thereto with an outer end, which spring holder is rotatable on an axis coinciding with the axis of the pulley and is mounted lockably on the housing.

8. Potentiometer device as claimed in any of the foregoing claims, wherein the cord is a nylon- sheathed steel wire.

9. Potentiometer device as claimed in any of the foregoing claims, wherein the free end of the cord extends through a piece of flexible hose connected thereto on the end.
